# NEW EUROPEAN PATENT SPECIFICATION

(11) **EP 0 566 200 B2**
(45) Date of publication and mention of the opposition decision: **25.06.2003**
(45) Mention of the grant of the patent: 21.01.1998
(21) Application number: 93201062.2
(22) Date of filing: 13.04.1993
(51) Int. Cl.: A01J 7/00, A01J 5/04, A01J 5/017

(54) **A construction for automatically milking animals, such as cows**
Gerät zum automatischen Melken von Tieren, wie zum Beispiel Kühen
Dispositif de traite automatique d'animaux, par exemple des vaches

(30) Priority: 13.04.1992 NL 9200678
(43) Date of publication of application: 20.10.1993
(60) Divisional application: 97202004.4
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 300 582
- EP-A- 0 565 189
- US-A- 2 226 087
- Schillingmann, "Versuchsanlage zum automatischen Melken - Konzeption und Ergebnisse", VDI/MEG Kolloquium Landtechnik, Heft 9 "Robotereinsatz in der Landwirtschaft am Beispiel des Melkens", Tagung Braunschweig-Völkenrode, 5./6.December 1996, pages 70-91
- "Landtechnik" Volume 9, Dec.1990, Verein Deutscher Ingenieure, R. Artmann et al. pages 331-348, "Automation of milking by using robots and electronics".
- Artmann R. und Schillingmann D., "Entwicklung eines rechnergestützten automatischen Haltungssystems für Milchvieh", pages 65-67, Bundesforschungsanstalt für Landwirtschaft, Braunschweig-Völkenrode; interner Arbeitsbericht 1990, Nr. 200/1991
- Schillingmann und Artmann, "Alternativen zur Handhabung der Melkbecher", VDI/MEG Kolloquium Landtechnik, Heft 9, "Robotereinsatz in der Landwirtschaft am Beispiel des Melkens", Tagung Braunschweig-Völkenrode, 5./6. Dec. 1990 pages 111-126
- Letter from Mr. Artmann to Mrs. Gray dated 3 April 2001
- Letter from Mr. Artmann to Mrs. Gray dated 24 October 2002

## Description

The invention relates to a construction for automatically milking animals, such as cows, comprising a milking parlour with a milking robot, the milking robot having a robot arm able to carry teat cups with connected thereto milk tubes.

Such a construction is known from EP-A-0 300 582.

The problem with such a construction may be that the animal may damage during milking the milk tubes by one of its legs, as the milktubes are not protected. Further, the kicking onto the milk tubes by the cow may interrupt the milking process.

The present invention has for its object to prevent such problems and to decrease the possibility of damage to the milking process.

According to the invention, the construction is therefore characterized by the features of claim 1.

After the connection of a teat cup to a teat, the carrier can thereby move in a favourable way relative to the teat cup. Due to the fact that there is created extra length of the tubes, by means of the upwardly extending circular loop, the milk tube and the pulsation tube of the teat cup can be pulled out of the holder during movements of the carrier.

From the prior right document EP-A-0 565 189 there is known a construction for automatically milking animals, with a milking robot having teat cups with connected thereto milk tubes, which are protectively and slidably accommodated in a holder in such a way that they form at least part of a circular loop, which loop is located in the holder in horizontal extending plane.

In accordance with a preferred feature of the invention, a number of pulsation tubes for pulsation of the suction air, as well as at least one air tube for moving. one or more pneumatic pistons are protectively mounted inside a holder. In accordance with a further preferred feature of the invention, the loops in the milk tubes and in the pulsation tubes may move, inside the carrier, in a mainly vertical plane.

In accordance with a still further preferred feature of the invention, a longitudinal guideway is provided near the bottom side of the holder for each milk tube. The guideway has as its advantage that it improves the motion of the loop inside the holder.

In accordance with a further feature preferred of the invention, the loops in the milk tube and the pulsation tube are separated from each other by walls provided in the holder.

The construction as per the invention may comprise a building, a fenced yard, a cow shed and/or other places for dairy animals.

For a better understanding of the invention and to show how the same may be carried into effect, reference will now be made, by way of example, to the accompanying drawings, in which:
Figure 1 is a side view of a holder enclosing milking tubes and lines;
Figure 2 is a plan view of the holder, in which the milk tubes and pulsation lines have been provided;
Figure 3 is a cross-sectional view of the holder taken on the line IV-IV in Figure 2;
Figure 4 is a front view of the holder taken on the line V-V in Figure 1.

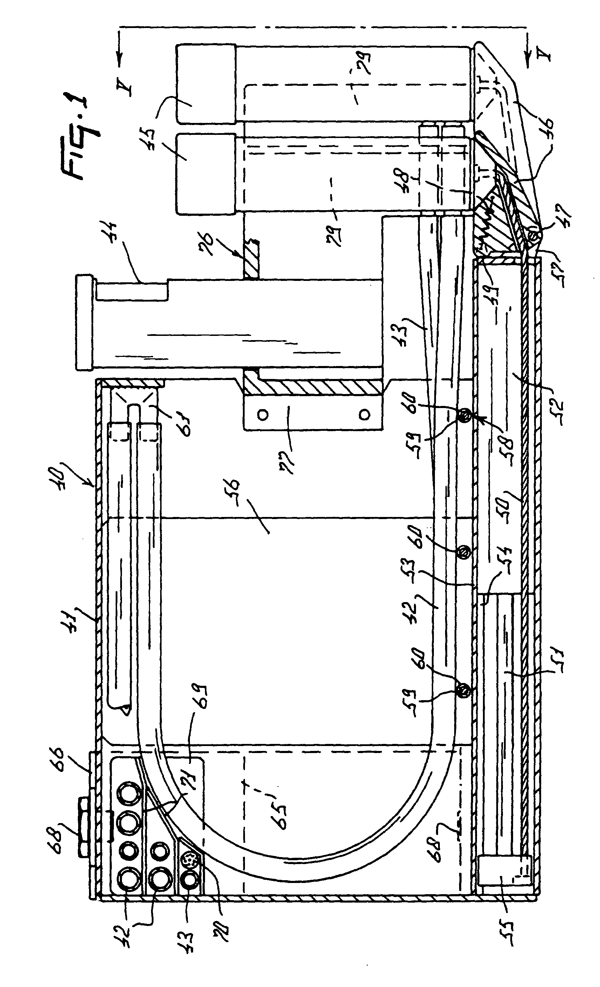

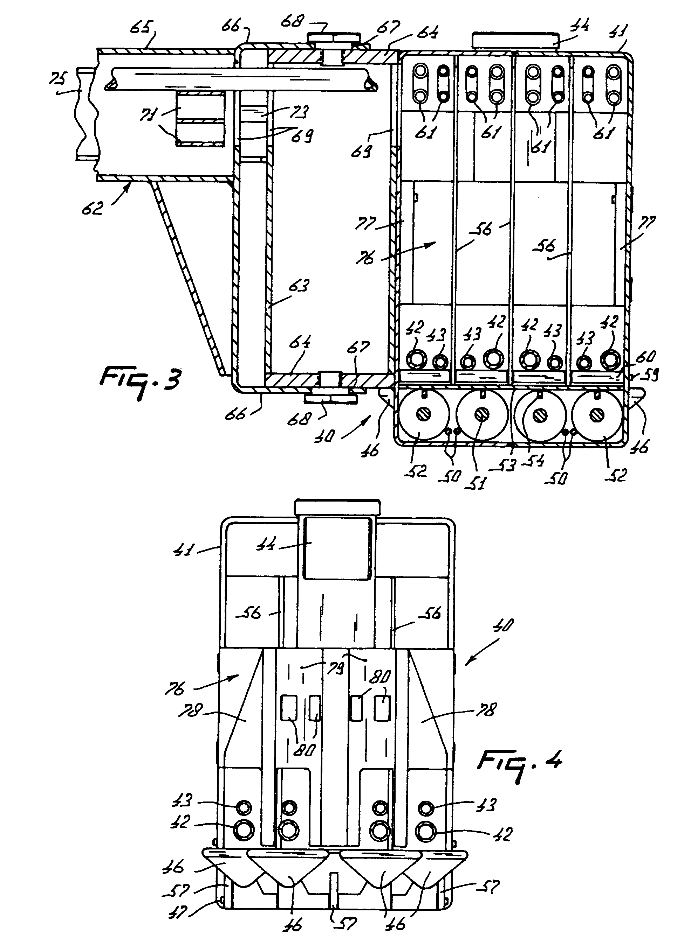

Figures 1 to 4 show a detail of a milking robot 33. Figure 1 is a cross-sectional view of one end of the robot arm 40. The robot arm 40 comprises a box-like holder 41 containing milk tubes 42 and pulsation tubes 43. Arranged near the end of the holder 41 is a laser device 44, with the aid of which the position of the teats of an animal can be determined. Moreover, four teat cups 45 are provided near the end of the holder 41. Each of the teat cups 45 bears by means of its bottom end on a supporting element 46, which has a conical seat. The bottom side of the teat cups 45 is of such a design that it fits in the conical seat. Each supporting element 46 is mounted capably of pivoting about a shaft 47, which shaft 47 is inserted through a bore near the bottom side of each supporting element 46. The shaft 47 is connected by means of three lugs 57 to the bottom side of the holder 41. Positioned between each of the supporting elements 46 and the holder 41 is a spring 48, by means of which the supporting element 46, which has a stop plane 49, is pulled up against the bottom side of the holder 41. Arranged at the bottom side of the teat cups 45 is a pulling member 50, constituted by cables or cords, produced of a suitable flexible material. The pulling member 50 is passed through a hole drilled in the supporting element 46, as well as through a hole drilled in the holder 41. The pulling member 50 extends to as far as the end of a piston rod 51 of a cylinder 52, where it is attached to a cap 55. Figure 3 shows that four cylinders 52 have been disposed in a side-by-side relationship on the bottom of the holder 41. Through the overall width of the holder 41 a metal plate 53 extends above the cylinders 52. Four guide strips 54 are disposed in the longitudinal direction of the metal plate 53. The guide strips 54 constitute a longitudinal guideway for the round caps 55, which are provided at the end of the piston rod 51. The caps 55 have a notch, in which the guide strips 54 fit. By energizing the cylinders 52 the caps 55 are moved along the guide strips 55 and the teat cups 45 are pulled into the conical seats of the supporting elements 46 by means of the flexible pulling members 50.

In the length-wise direction of the holder 41, three partitions 56 are arranged with equal interspaces between the plate 53 and the upper side of the holder 41. The partitions 56 are positioned approximately in the midway point of the holder 41 and have a length which amounts to approximately 1/3 of the overall length of the holder 41. Consequently, the three partitions 56 partly divide the space above the plate 53 into four separate spaces. In each of these four spaces a milk tube 42 and a pulsation tube 43 of a teat cup 45 are situated. The pulsation tube 43 and the milk tube 42 are positioned in the holder 41 in such a manner that they form a loop. The milk tubes 42 and the pulsation tube 43 extend from the teat cups 45 in the horizontal direction to approximately near the other end of the holder 41. The milk tubes 42 and the pulsation tubes 43 are supported near the plate 53 by three longitudinal guideways 58 which are provided remote from each other in the holder 41. The longitudinal guideways 58 include shafts 59 arranged between the two lateral walls of the holder 41. Four tubes 60, which are each independently rotatable about the shaft 59, are inserted over each shaft 59. A milk tube 42 and a pulsation tube 43 bear on each tube 59.

In the holder 41, near that end that is remote from the teat cups 45, the milk tubes 42 and the pulsation tubes 43 are bent to the upper side of the holder 41 in such a way as to form half a circle. Near the upper side of the holder 41, the tubes 42 and 43 extend thereafter in parallel to the upper side of the holder 41 towards the laser device 44, to as far as U-shaped auxiliary members 61. The U-shaped auxiliary members 61 are applied against the interior wall of the holder 41. Using the U-shaped auxiliary members 61, the milk tubes 42 and the pulsation tubes 43, respectively, are led back through an angle of 180° towards the rear side of the holder 41 where the tubes are folded through 90° towards a carrier 62.

A box girder 63 is disposed against the side of the holder 41, in the vertical direction. At the upper and bottom sides, the box girder 63 is covered by metal plates 64. At the upper and bottom sides, the box girder 63 is clamped between a carrier 62 designed as a fork. The carrier 62 comprises a box girder 65, the end of which is provided with a U-shaped plate 66. The bottom and upper sides of the box girder 63 are clamped by the U-shaped plate 66. At both the upper and the bottom side of the U-shaped plate 66, holes 67 are drilled, through which bolts 68 are inserted. The bolts 68 are relatively short and are provided with thread near the bottom end only. The bolts 67 are screwed in the bottom and upper side, respectively, of the box girder 63, thus forming a pivot shaft, about which the holder 41 can pivot relative to the carrier 62. The upper sides of the box girder 63 and the end of the carrier 62 are provided with apertures 69. The milk tubes 42, the pulsation tubes 43 and an electric wire 70 are passed through the apertures 69. Near the end of the box girder 63, a plurality of supporting elements 71 are positioned, which support the milking tubes 42, the pulsation tubes 43 and the electric wire 70.

An angular strip 72 is provided in the corner between the box girder 63 and the holder 41. The end of a piston rod 73 of a cylinder 74 is secured to the angular strip 72.

The cylinder 74 is arranged parallel to the carrier 62 and is accommodated in a housing 75. By means of the cylinder 75, the holder 41 can be pivoted with respect to the carrier 62 about the vertical pivot shaft formed by the bolts 68.

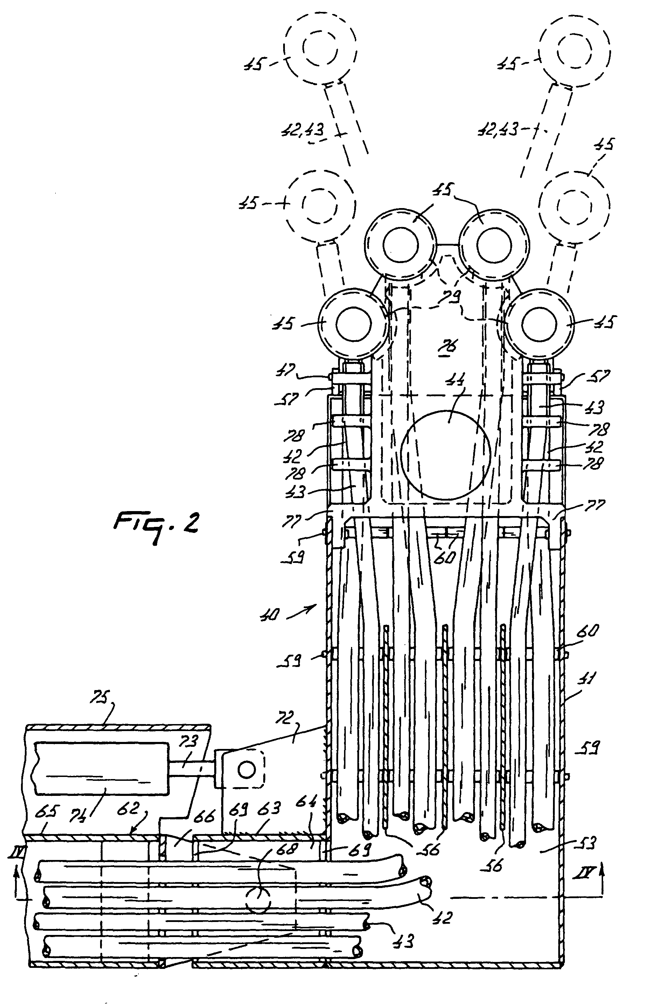

A nose-shaped cast iron member 76 is disposed near the end of the holder 41. The nose-shaped cast iron member 76 comprises a rectangular housing which at one end is provided with lugs 77. The housing is screwed to the interior walls of the holder 41 by means of the lugs 77. The height of the nose-shaped cast iron member 76 amounts to approximately half the height of the holder 41. The nose-shaped housing 76 extends from the leading side of the holder 41 to above the supporting elements 46. The laser device 44 is located near the leading side of the holder 41. The laser device 44 is partly disposed in the housing of the nose-shaped cast iron member 76. The upper portion of the laser device 44 extends to beyond the housing of the nose-shaped cast iron member 76 and to just above the holder 41. The two upper halves of the side edges of the nose-shaped cast iron member 76 are provided with bevelled, upwardly extending triangular ribs 78. The triangular ribs 78 extend from the upper edge of the nose-shaped cast iron member 76 to the exterior, so that the largest width is obtained near the midway point of the side wall of the nose-shaped cast iron member 76. Between the lower side of ribs 78 and the upper side of the outermost supporting elements 46 there is a space, in which the milk tubes 42 and the pulsation tubes 43 of the outermost teat cups 45 are positioned. The outermost milk tubes 42 and the outermost pulsation tubes 43 are shielded, seen from above, by the ribs 78, so that, when a cow kicks, for example, with its leg from above against the leading side of the holder 41, the tubes are shielded by the ribs 78. The milk tubes 42 and the pulsation tubes 43 of the two central teat cups 45 extend through the housing of the nose-shaped cast iron member 76 and are consequently protected by the housing itself from, for example, kicking by an animal (Figure 2, 4).

The leading side of the nose-shaped cast iron member 76 is, in a plan view, in the shape of a trapezium (Figure 2). The oblique sides of the nose-shaped cast iron member 76 are provided with curved planes of contact 79, against which the teat cups 45 bear. In the curved planes of contact 79 magnets 80 are provided, with the aid of which the teat cups can be moved upwardly and/or downwardly relative to the curved plane of contact 79.

The construction for automatically milking animals operates as follows:

After a cow has entered the milking box 26, the robot arm 40 is swiveled to under the animal. The position of the cow's teats is determined by means of the laser device 44. By energizing the cylinder 74, the holder 41 is pivoted about the bolts 68 until the teat cups are positioned under the cow's teats. Thereafter, the pressure is removed from one of the cylinders 52, as a result of which the pulling member 50 is not tightened any more and consequently the associated teat cup 45 is not pulled into the conical seat of the supporting element 46. Simultaneously, the magnet 80 of the relevant teat cup 45 is energized and the teat cup 45 is moved upwardly along the plane of contact 79 to as far as a teat. The relevant teat cup 45 is at that moment evacuated, so that the teat cup 45 is firmly attached to the teat. After the first teat cup 45 has been connected, the other teat cups 45 follow. Usually, the two centremost teat cups 45 are connected first and thereafter the two outermost teat cups 45. In Figure 2, interrupted lines illustrate the possible configuration of the teat cups 45 after they have been connected to the teats of an animal. During connection of the teat cups 45, the holder 41 moves relative to the connected teat cup(s) 45, and consequently a portion of the milk tube 42 and the pulsation tube 43 will move relatively with respect to the holder 41. In the present invention, this can be effected in a particularly advantageous manner, as the milk tube 42 together with the pulsation tube 43 have been disposed slidably in the holder 41. During the motion of the holder 41, the milk tubes 42 and the pulsation tubes 43, of the teat cups 45 connected to the teats of an animal, are wound into or out of the holder 41 along the guideways 58. The loops in the milk tubes 42 and the pulsation tubes 43 render it possible for the tubes to slide in the longitudinal direction of the holder 41 and at the same time provide that the tubes can be relatively long and can still be accommodated in the holder 41 in a compact manner.

Uncoupling the teat cups 45 is effected by removing the vacuum in the teat cups 45 and the simultaneously energization of the cylinders 52, in response to which the piston rods 51 are moved, so that the teat cups 45 are pulled into the conical seats of the supporting elements 46 by pulling members 50.

## Claims

1. A construction for automatically milking animals, such as cows, comprising a milking parlour with a milking robot, the milking robot having a robot arm able to carry teat cups with connected thereto milk tubes, **characterized in that** the milk tubes are protectively and slidably accommodated in a box-like holder comprised in the robot arm in such a way that they each form at least part of a circular loop, which loops are located in the holder in an upwardly extending plane.

2. A construction as claimed in claim 1, **characterized in that** a plurality of pulsation tubes for the pulsation of the suction air, as well as at least one air tube for moving one or more pneumatic pistons are protectively accommodated in the holder.

3. A construction as claimed in claim 1 or 2, **characterized in that** in the holder four milk tubes are positioned, each comprising a loop.

4. A construction as claimed in claim 1 - 3, **characterized in that** the loop mainly extends in a vertical plane.

5. A construction as claimed in any one of the preceding claims, **characterized in that** one or more teat cups are connected to a tube, which tube is passed through an aperture in the carrier of the teat cup.

6. A construction as claimed in any one of the preceding claims, **characterized in that** the milk tubes are located in a mainly horizontal plane near the upper side of the holder.

7. A construction as claimed in any one of the preceding claims, **characterized in that** near the bottom side of the holder the milk tubes are also arranged in a mainly horizontal plane.

8. A construction as claimed in any one of the preceding claims, **characterized in that** a variety of milk tubes, pulsation tubes and at least one compressed air tube and an electric wire are disposed in the holder.

9. A construction as claimed in any one of the preceding claims, **characterized in that** the milk tube system comprises a U-shaped auxiliary member, through which the milk can flow.

10. A construction as claimed in any one of the preceding claims, **characterized in that** the holder is mounted at approximately one to five centimetres above the ground of the milking parlour.

11. A construction as claimed in any one of the preceding claims, **characterized in that** a guideway is provided for a milk tube near the bottom side in the holder.

12. A construction as claimed in any one of the preceding claims, **characterized in that** a guideway is provided for a pulsation tube near the bottom side in the holder.

13. A construction as claimed in claim 11 or 12, **characterized in that** the guideway includes a plurality of rollers which are arranged one after the other.

14. A construction as claimed in any one of the preceding claims, **characterized in that** near the end of the holder a plurality of shielding members are provided, which prevent the animal from damaging the milk tubes with its leg.

15. A construction as claimed in claim 14, **characterized in that** the shielding means are constituted by upwardly extending ribs.

16. A construction as claimed in any one of the preceding claims, **characterized in that** teat cups are mounted at the end of the holder in a conical seat.

17. A construction as claimed in claim 16, **characterized in that** the conical seat is hingeably connected relative to the holder.

18. A construction as claimed in claim 17, **characterized in that** there is for each teat cup a conical seat, which is movable against the action of a spring.

19. A construction as claimed in any one of the preceding claims, **characterized in that** the construction includes a pivot shaft, which is assembled in two portions, a first portion being fitted in a wall and the other portion in an opposite wall.

20. A construction as claimed in any one of the preceding claims, **characterized in that**, during operation, the holder extends to under the animal.

21. A construction as claimed in any one of the preceding claims, **characterized in that**, during operation, the holder extends in the longitudinal direction of the milking parlour.

22. A construction as claimed in any one of the preceding claims, **characterized in that** the holder is constituted by a predominantly hollow carrier.

23. A construction as claimed in any one of the preceding claims, **characterized in that** the teat cups are disposed at one end of the holder.

24. A construction as claimed in any one of the preceding claims, **characterized in that** at one end the holder includes a pivot shaft which connects the holder to a carrier.

## Patentansprüche

1. Vorrichtung zum automatischen Melken von Tieren, wie z. B. Kühen, mit einem Melkstand und einem Melkroboter, dessen Roboterarm geeignet ist, Zitzenbecher mit daran angeschlossenen Milchleitungen zu tragen,
**dadurch gekennzeichnet, daß** die Milchleitungen in einem in dem Roboterarm angeordneten, kastenförmigen Halter geschützt und verschiebbar angeordnet sind, derart, daß sie jeweils zumindest den Teil einer kreisförmigen Schlaufe bilden, wobei die Schlaufen in dem Halter in einer sich aufwärts erstreckenden Ebene liegen.

2. Vorrichtung nach Anspruch 1,
**dadurch gekennzeichnet, daß** mehrere Pulsierleitungen zum Pulsieren der Saugluft und mindestens eine Luftleitung zum Bewegen eines oder mehrerer pneumatischer Kolben in dem Halter geschützt angeordnet sind.

3. Vorrichtung nach Anspruch 1 oder 2,
**dadurch gekennzeichnet, daß** in dem Halter vier Milchleitungen angeordnet sind, die jeweils eine Schlaufe bilden.

4. Vorrichtung nach Anspruch 1 bis 3,
**dadurch gekennzeichnet, daß** die Schlaufe im wesentlichen in einer vertikalen Ebene liegt.

5. Vorrichtung nach einem der vorhergehenden Ansprüche,
**dadurch gekennzeichnet, daß** ein oder mehrere Zitzenbecher an eine Leitung angeschlossen sind, die durch eine Öffnung im Träger des Zitzenbechers geführt ist.

6. Vorrichtung nach einem der vorhergehenden Ansprüche,
**dadurch gekennzeichnet, daß** die Milchleitungen in einer im wesentlichen horizontalen Ebene nahe der Oberseite des Halters angeordnet sind.

7. Vorrichtung nach einem der vorhergehenden Ansprüche,
**dadurch gekennzeichnet, daß** auch die Milchleitungen nahe der Unterseite des Halters in einer im wesentlichen horizontalen Ebene angeordnet sind.

8. Vorrichtung nach einem der vorhergehenden Ansprüche,
**dadurch gekennzeichnet, daß** in dem Halter eine Vielzahl von Milchleitungen und Pulsierleitungen sowie mindestens eine Druckluftleitung und eine elektrische Leitung angeordnet sind.

9. Vorrichtung nach einem der vorhergehenden Ansprüche,
**dadurch gekennzeichnet, daß** das Milchleitungssystem ein U-förmiges Zwischenglied für den Durchfluß von Milch aufweist.

10. Vorrichtung nach einem der vorhergehenden Ansprüche,
**dadurch gekennzeichnet, daß** der Halter in einer Höhe von etwa einem bis fünf Zentimetern über dem Boden des Melkstandes befestigt ist.

11. Vorrichtung nach einem der vorhergehenden Ansprüche,
**dadurch gekennzeichnet, daß** in dem Halter nahe dessen Unterseite eine Führung für eine Milchleitung ausgebildet ist.

12. Vorrichtung nach einem der vorhergehenden Ansprüche,
**dadurch gekennzeichnet, daß** in dem Halter nahe dessen Unterseite eine Führung für eine Pulsierleitung ausgebildet ist.

13. Vorrichtung nach Anspruch 11 oder 12,
**dadurch gekennzeichnet, daß** die Führung mehrere hintereinander angeordnete Rollen aufweist.

14. Vorrichtung nach einem der vorhergehenden Ansprüche,
**dadurch gekennzeichnet, daß** nahe dem Ende des Halters mehrere Abschirmelemente angeordnet sind, die verhindern, daß das Tier die Milchleitungen mit dem Fuß beschädigt.

15. Vorrichtung nach Anspruch 14,
**dadurch gekennzeichnet, daß** die Abschirmvorrichtung durch aufwärts gerichtete Stäbe gebildet ist.

16. Vorrichtung nach einem der vorhergehenden Ansprüche,
**dadurch gekennzeichnet, daß** Zitzenbecher am Ende des Halters in einem konischen Sitz angeordnet sind.

17. Vorrichtung nach Anspruch 16,
**dadurch gekennzeichnet, daß** der konische Sitz mit dem Halter schwenkbar verbunden ist.

18. Vorrichtung nach Anspruch 17,
**dadurch gekennzeichnet, daß** für jeden Zitzenbecher ein konischer Sitz vorgesehen ist, der gegen die Kraft einer Feder bewegbar ist.

19. Vorrichtung nach einem der vorhergehenden Ansprüche,
**gekennzeichnet durch** eine Schwenkachse, die aus zwei Teilstücken zusammengesetzt ist, wobei ein erstes Teilstück in einer Wand und das andere Teilstück in einer gegenüberliegenden Wand angeordnet ist.

20. Vorrichtung nach einem der vorhergehenden Ansprüche,
**dadurch gekennzeichnet, daß** sich der Halter im Betrieb unterhalb des Tieres erstreckt.

21. Vorrichtung nach einem der vorhergehenden Ansprüche,
**dadurch gekennzeichnet, daß** sich der Halter im Betrieb in Längsrichtung des Melkstandes erstreckt.

22. Vorrichtung nach einem der vorhergehenden Ansprüche,
**dadurch gekennzeichnet, daß** der Halter durch einen überwiegend hohlen Träger gebildet ist.

23. Vorrichtung nach einem der vorhergehenden Ansprüche,
**dadurch gekennzeichnet, daß** die Zitzenbecher an einem Ende des Halters angeordnet sind.

24. Vorrichtung nach einem der vorhergehenden Ansprüche,
**dadurch gekennzeichnet, daß** der Halter an einem Ende eine Schwenkachse aufweist, die den Halter mit einem Träger verbindet.

## Revendications

1. Structure pour la traite automatique d'animaux, tels que des vaches, comprenant une arrière-salle de traite pourvue d'un robot de traite, le robot de traite ayant un bras de robot pouvant supporter des gobelets trayeurs auxquels sont reliés des tubes de traite, **caractérisée en ce que** les tubes de traite sont logés de façon protégée et coulissante dans un support en forme de boîtier contenu dans le bras de robot, de manière à former chacun au moins une partie d'une boucle circulaire, ces boucles étant situées dans le support dans un plan s'étendant vers le haut.

2. Structure selon la revendication 1, **caractérisée en ce qu'**une pluralité de tubes d'impulsion, prévus pour la pulsation de l'air d'aspiration, ainsi qu'au moins un tube à air pour le déplacement d'un ou plusieurs pistons pneumatiques, sont logés de manière protégée dans le support.

3. Structure selon la revendication 1 ou 2, **caractérisée en ce que** quatre tubes à lait sont placés dans le support, comprenant chacun une boucle.

4. Structure selon les revendications 1 à 3, **caractérisée en ce que** la boucle s'étend principalement dans un plan vertical.

5. Structure selon l'une quelconque des revendications précédentes, **caractérisée en ce qu'**un ou plusieurs gobelets trayeurs sont reliés à un tube, ce tube étant passé à travers une ouverture ménagée dans le support du gobelet trayeur.

6. Structure selon l'une quelconque des revendications précédentes, **caractérisée en ce que** les tubes à lait sont placés dans un plan principalement horizontal proche du côté supérieur du support.

7. Structure selon l'une quelconque des revendications précédentes, **caractérisée en ce que** près du côté inférieur du support, les tubes à lait sont également disposés dans un plan principalement horizontal.

8. Structure selon l'une quelconque des revendications précédentes, **caractérisée en ce qu'**une variété de tubes à lait, de tubes d'impulsion et au moins un tube à air comprimé et un fil électrique, sont disposés dans le support.

9. Structure selon l'une quelconque des revendications précédentes, **caractérisée en ce que** le système de tubes à lait comprend un organe auxiliaire en forme de U, par lequel le lait peut s'écouler.

10. Structure selon l'une quelconque des revendications précédentes, **caractérisée en ce que** le support est monté à peu près à 1 à 5 cm au-dessus du sol de l'arrière-salle de traite.

11. Structure selon l'une quelconque des revendications précédentes, **caractérisée en ce qu'**une voie de guidage est prévue pour un tube à lait près du côté inférieur dans le support.

12. Structure selon l'une quelconque des revendications précédentes, **caractérisée en ce qu'**une voie de guidage est prévue pour un tube d'impulsion près du côté inférieur dans le support.

13. Structure selon la revendication 11 ou 12, **caractérisée en ce que** la voie de guidage comprend une pluralité de rouleaux qui sont disposés les uns après les autres.

14. Structure selon l'une quelconque des revendications précédentes, **caractérisée en ce que** près de l'extrémité du support est prévue une pluralité d'organes de protection, qui empêchent l'animal d'endommager les tubes à lait avec leur patte.

15. Structure selon la revendication 14, **caractérisée en ce que** les moyens de protection sont constitués par des nervures s'étendant vers le haut.

16. Structure selon l'une quelconque des revendications précédentes, **caractérisée en ce que** des gobelets trayeurs sont montés à l'extrémité du support dans un siège conique.

17. Structure selon la revendication 16, **caractérisée en ce que** le siège conique est relié de manière articulée au support.

18. Structure selon la revendication 17, **caractérisée en ce que** pour chaque gobelet trayeur est prévu un siège qui est déplaçable à l'encontre de l'action d'un ressort.

19. Structure selon l'une quelconque des revendications précédentes, **caractérisée en ce que** la structure comprend un arbre de pivot, qui est assemblé en deux parties, une première partie étant montée dans une paroi et l'autre partie dans une paroi opposée.

20. Structure selon l'une quelconque des revendications précédentes, **caractérisée en ce que**, durant le fonctionnement, le support s'étend au-dessous de l'animal.

21. Structure selon l'une quelconque des revendications précédentes, **caractérisée en ce que**, durant le fonctionnement, le support s'étend dans la direction longitudinale de l'arrière-salle de traite.

22. Structure selon l'une quelconque des revendications précédentes, **caractérisée en ce que** le support est constitué par un support qui est creux de façon prédominante.

23. Structure selon l'une quelconque des revendications précédentes, **caractérisée en ce que** les gobelets trayeurs sont disposés à une extrémité du support.

24. Structure selon l'une quelconque des revendications précédentes, **caractérisée en ce qu'**à une extrémité, le support comprend un arbre de pivot qui relie le support à un élément porteur.
